# EUROPEAN PATENT APPLICATION

(11) **EP 1 990 307 A2**
(43) Date of publication of application: **12.11.2008**
(21) Application number: 07018226.6
(22) Date of filing: 17.09.2007
(51) Int. Cl.: B66D 3/18

(54) **A DC motor structure for hoist machine**

(30) Priority: 11.05.2007 JP 2007003410
(71) Applicant: Pan, I-Te, Dajia Township T'ai chung (TW)
(72) Inventor: Pan, I-Te, Dajia Township T'ai chung (TW)
(74) Representative: Kador & Partner

(57) **Abstract**

A DC motor for hoist machine that is essentially a design of applying DC brushless inverter motor in the hoist machine. The stator (13) and rotor (12) of the brushless motor (1) are formed in such a manner that a plurality of magnets are placed with alternation in polarity into the inside of the rotor (12) of motor (1) to generate main magnetic field, and that a current is supplied to the windings inserted within the block made of silicon steel lamination to exert push force. The integration of the application of DC brushless inverter motor (1) combined with the electric and electronic elements gradually brings about inverter-controlled technology, by which a energy-saving effect can be obtained. A speed-regulation button (25) is provided on the push button switch (277) by which the rotation speed can be regulated directly so as to increase the entire performance in use.

## Description

### BACKGROUND OF THE INVENTION

### 1. Field of the invention

The present invention relates to a DC motor structure for hoist machine, more particularly to novel DC motor structure that is a design of applying the DC brushless inverter motor in the hoist machine, in which the motor will not suffer wear and loss in the entire practical operation thereof, and the motor obtains better energy-saving performance so as not to consume large power. Therefore, the operation performance is further enhanced in its entire operation.

### 2. Brief Description of the Prior Art

Due to the progress in industry and commerce and the rapid development in technology and science, a greater part of all enterprises in the contemporary world devote themselves to a variety of automation which not only reduce substantial amount of personnel, thus the labor cost and the failure rate, jointly enhances the safety at working, but also raise production efficiency so as to increase production capacity.

Hoist machine is often found in some manufacturing factories for the transportation of heavy items or large mechanical equipment etc.. The hoist machine mainly comprises a support frame provided on the upper part of the factory, rails provided on the support frame, a power source moving on the rails, a motor connected with and carried with the power source such that the motor can raise up heavy items or large mechanical equipment by the winding action caused by the motor, and the heavy items or the large mechanical equipment raised upward by the motor can be transported to desired locations by the moving of the power source on the rails.

Although the above hoist machine can achieve the expected effect of transporting heavy items or large mechanical equipment or the like to a desired position, however it is discovered in the practical operation that the carbon brushes in the carbon-brush DC motor used in ordinary hoist machine suffers abrasion and wear, and that large amount of power consumption is found during the start of the motor having carbon brushes. The abrasion and wear happened on the carbon brush results in frequent replacement of parts and components when in use, so that the service life is not long. Besides, the defect of large power consumption occurred during the start of carbon-brush DC motor will eventually accelerate the drop-out of it from the industrial application in view of the high-cost of energy resource, such as petroleum, moreover the increasingly deficiency in energy resource in this world, that triggers the momentum of major developed countries to pay much attention to the energy development and energy resource control. Not only the search of substitutive energy resource and the development of novel energy source of next generation has been actively proceeded as the sourcing respect, but also the improvement on the technology of energy conversion efficiency is conducted based on the existing mode of energy source utilization as the reduction on consumption respect, so that the energy source consumption is indirectly reduced by the enhancement of energy conversion and utilization. It is this reason that the improvement on the carbon-brush DC motor is increasingly expected by the industries.

Therefore, in view of the above defects, the inventors of the present invention devote to the research and improvement on the conventional structure and major defects after continuous contemplation and design based on the experience and knowledge accumulated in the long term involvement of relevant field, with the purpose to provide a novel DC motor structure for hoist machine which has no such defects as existed in conventional systems.

### SUMMARY OF THE INVENTION

The DC motor structure for hoist machine according to the present invention is essentially a design of applying the DC brushless inverter motor in the hoist machine. The stator and the rotor of a brushless motor are formed in such a manner that a plurality of magnets are placed with alternation in polarity into the interior of the rotor of motor to generate main magnetic field, and that a current is supplied to the windings inserted within the block made of silicon steel lamination to exert push force. The integration of the application of DC brushless inverter motor combined with the electric and electronic elements gradually brings about inverter-controlled technology with maturity, by which excellent energy-saving effect can be obtained in case of the application having variable load, due to the fact that the inverter control has better manipulation property and better features of motor-output, and possesses high torque-output and better manipulation property in low-speed of rotation running condition. Furthermore, a speed-regulation button is provided on the push button switch of the present invention, by which the rotation speed can be regulated directly so as to increase the entire practicality in usage.

### BRIEF DESCRIPTION OF THE DRAWINGS

The present invention will be better understood by the detailed description of a preferred embodiment with reference to the accompanying drawings, in which:
Fig. 1 is a perspective view showing the appearance of the DC motor structure of the present invention.
Fig. 2 is a perspective exploded view of the motor of the present invention.
Figure 3 is a schematic view showing the controller of the present invention.
Figure 4 is a circuit block diagram of the power source section of the controller of the present invention.
Figure 5 is a circuit block diagram of the control section of the controller of the present invention.
Figure 6 is a schematic view of the using state of the present invention.

### DETAILED DESCRIPTION OF THE PREFERRED EMBODIMENTS

The technical content, objects and effectiveness of the present invention will become more apparent by the detailed description of the following preferred embodiments of the present invention with reference to the accompanying drawings.

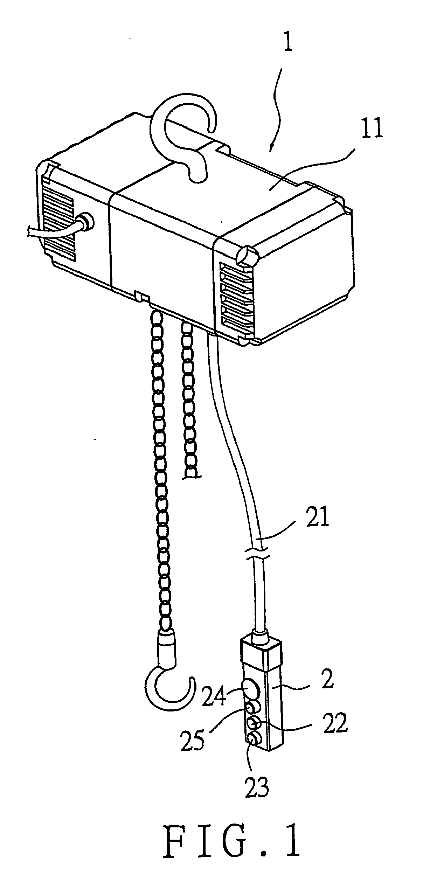

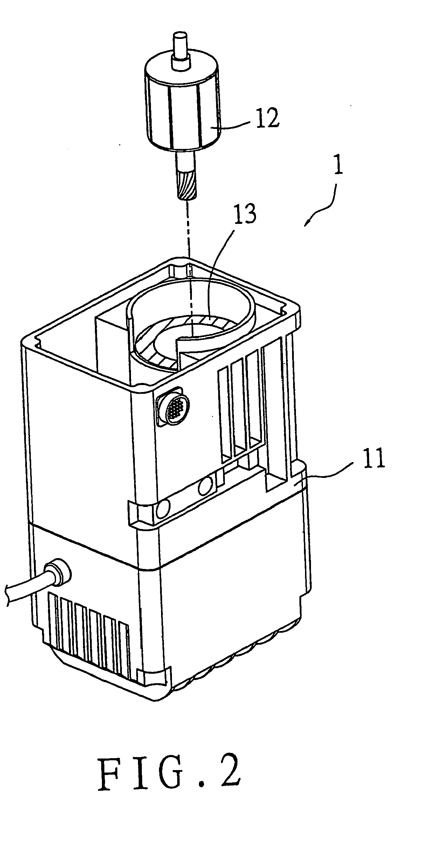

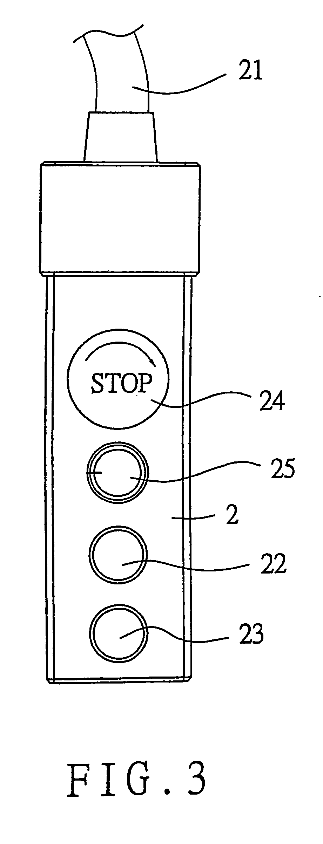

Firstly referring to Figure 1, which shows a perspective view of the appearance of a DC motor structure for hoist machine of the present invention, comprising a motor (1) and a controller (2), in which :
the motor (1), as shown in a perspective exploded view of Figure 2, has a casing (11), the stator (13) and rotor (12) of the brushless motor (1) being formed in the interior of the casing (11) in such a manner that a plurality of magnets are placed with alternation in polarity into the inside of the rotor (12) to generate main magnetic field, and that a current is supplied to the windings inserted within the block made of silicon steel lamination to exert push force,
the controller (2), as shown in a schematic view of the same of the present invention in Figure 3, is connected with the motor (1) by a control wiring (21); an ascending control button (22), a descending control button (23), an emergency stop button (24) and a speed regulating button (25) being provided on the controller (2).

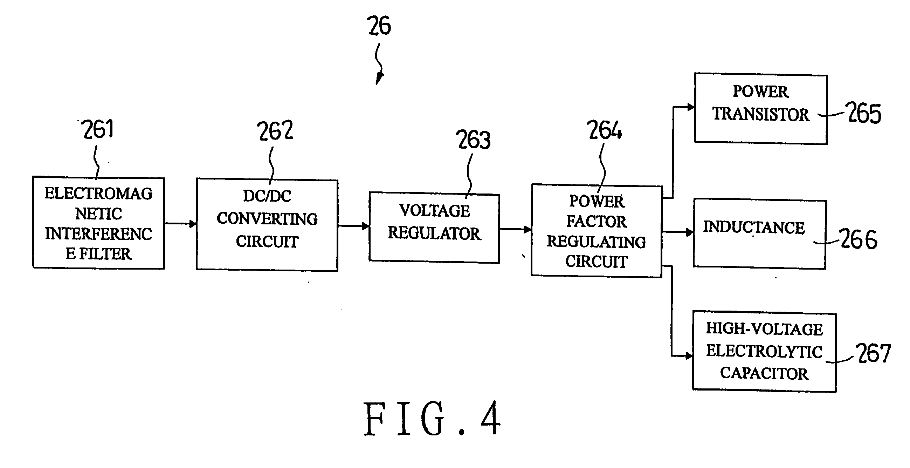

The controller (2) further comprises a power source section (26). As shown in a circuit block diagram of the power source section of the controller (2) of the present invention of Figure 4, the power source section (26) has an electromagnetic interference filter (261) which is connected with a DC/DC converting circuit (262). Then, the DC/DC converting circuit (262) is connected with a voltage regulator (263) which is in turn connected to a power factor regulating circuit (264), and the power factor regulating circuit (264) is linked with a power transistor (265), an inductance (266) and a high-voltage electrolytic capacitor (267). The power inputted to the controller is filtered into a high voltage DC by the electromagnetic interference filter (261) and is converted into low-voltage DC of 24V. At the same time, the voltage is regulated by the voltage regulating circuit (263) into low-voltage DC of 18V, which is subsequently raised to high-voltage DC of 350V by the power factor regulating circuit (264) cooperating with the power transistor (265), the inductance (266) and the high-voltage electrolytic capacitor (267), and the voltage output is always held at this value no matter whether the load becomes.

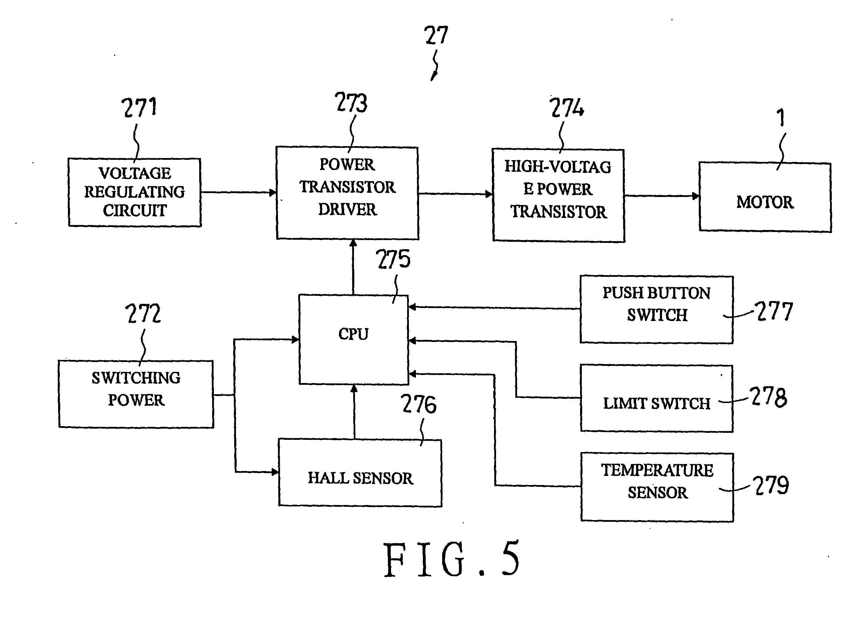

Furthermore, the control section (27) of the controller (26), as shown in a circuit block diagram of the control section (27) of the controller (2) of the present invention of Figure 5, can input the low-voltage DC of 24V generated at the power source section (26) and high-voltage DC of 350V respectively. Each power inputted is provided with a voltage regulating circuit (271) and a switching power (272). The voltage regulating circuit (271) is connected with a power transistor driver (273) which is then connected to a high-voltage power transistor (274), and in turn to the motor (1). The switching power (272) is connected with a CPU (275) and a Hall sensor (276) respectively. The CPU (275) can be connected and thus inputted from the Hall sensor (276), a push button switch (277), a limit switch (278) and a temperature sensor (279). The limit switch (278) corresponds to ascending control button (22) and descending control button (23), while the push button switch (277) corresponds to the emergency stop switch (24) and speed regulating button (25). In this way, the low-voltage DC of 24V inputted to the voltage regulating circuit (271) is regulated into low-voltage DC of 18V which is then supplied to the power transistor driver (273). Similarly, the low-voltage DC of 24V, generated at the power source (26), inputted to the switching power (272) is regulated into low-voltage DC of 18V which is supplied to the CPU (275), on the other hand, is regulated into low-voltage DC of 5V which is supplied to the Hall sensor (276). The CPU (275) converts the signal received from the push button switch (277) into a motor control signal and then output it to the power transistor driver (273), and generates a corresponding square wave according to the input signal state of the Hall sensor (276). The power transistor driver (273) converts the control signal received from the CPU (275) into a high-voltage signal and then output it to the high-voltage power transistor (274). In response to the high-voltage signal inputted from the power transistor driver (273), the high-voltage power transistor (274) generates a corresponding square wave to control the action of the motor (1). When the limit switch (278) is contacted or the temperature sensor (279) detects temperature abnormality, the CPU (275) will stop the action and display malfunction information.

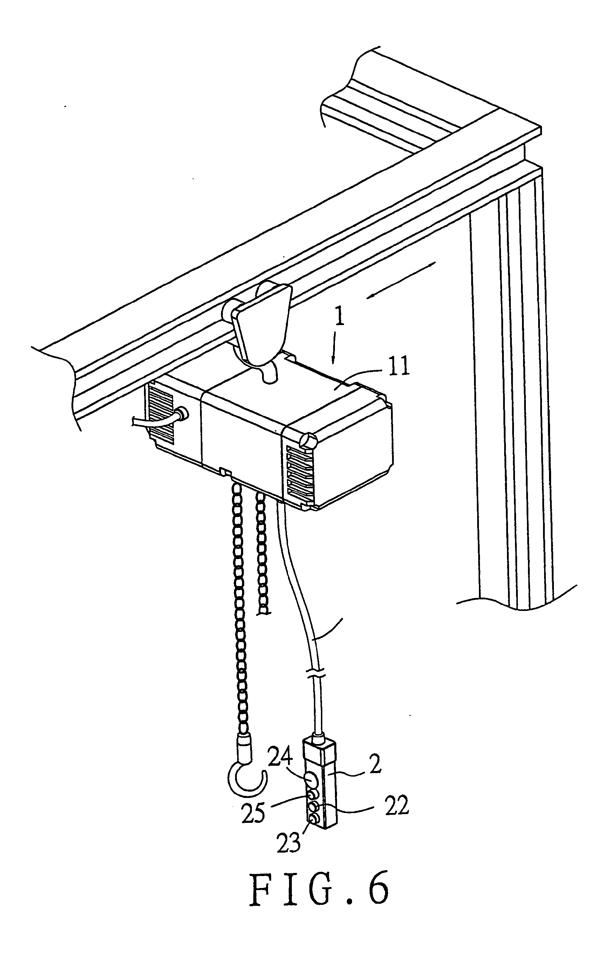

According to the above-mentioned action of the control section, referring to a schematic view of the using state of the present invention of Figure 6, the action of the motor (1) can be controlled to raise heavy items or large mechanical equipment upwardly and transport the raised heavy items or large mechanical equipment to a desired location, , when the user presses the ascending control button (22) on the controller (2), and subsequently allow the motor (1) stop at the desired location when releasing the ascending control button (22). The motor (1) can be abruptly stopped in emergency by the pushing of the emergency stop button (24) on the controller (2). In addition, the adjustment of the running speed of the motor (1) can be conducted by user to push the speed regulating button (25) provided on the controller (2).

Based on the foregoing, the brushless DC motor for hoist machine of the present invention essentially forms with a stator and a rotor in such a manner that a plurality of magnets are placed with alternation in polarity into the interior of the rotor of the motor to generate main magnetic field, and that a current is supplied to the windings inserted within the block made of silicon steel lamination to exert push force, and the motor being connected to a speed-regulation button provided on controller. Comparing to the conventional structure, the motor of the present invention will not suffer abrasion and wear in the entire operation thereof, and the motor obtains better energy-saving performance so as not to consume large power. Furthermore, the running speed of the motor can be regulated by the speed regulating button provided on the controller; the operation performance is further enhanced in its entire practical application.

## Claims

1. A DC motor structure for hoist machine, essentially comprising a motor (1) cooperating with a controller (2), wherein
said motor (1) is formed with a stator (13) and a rotor (12) in such a manner that a plurality of magnets are placed with alternation in polarity into the interior of said rotor (12) of said motor (1) to generate main magnetic field, and that a current is supplied to the windings inserted within the block made of silicon steel lamination to exert push force, and
said controller (2) is provided with an ascending control button(22), a descending control button (23), an emergency stop button (24) and a speed regulating button (25).

2. A DC motor structure for hoist machine according to claim 1, wherein said controller (2) has a power source section (26), which contains an electromagnetic interference filter (261) connected with a DC/DC converting circuit (262), said DC/DC converting circuit (262) being connected to a voltage regulator (263), which is in turn connected to a power factor regulating circuit (264), and said power factor regulating circuit (264) being linked with a power transistor (265), an inductance (266) and a high-voltage electrolytic capacitor (267).

3. A DC motor for hoist machine according to claim 1, wherein said controller (2) further has a control section (27), which inputs the low-voltage DC of 24V generated at the power source section (26) and high-voltage DC of 350V respectively, each being provided with a voltage regulating circuit (271) and a switching power (272), the voltage regulating circuit (271) being connected with a power transistor driver (273) which is then connected to a high-voltage power transistor (274), and in turn to the motor (1); said switching power (272) being connected with a CPU (275) and a Hall sensor (276) respectively, said CPU (275) being connected and thus inputted from the Hall sensor (276), a push button switch (277), a limit switch (278) and a temperature sensor (279).
